# EUROPÄISCHE PATENTSCHRIFT

(11) **EP 0 736 193 B1**
(45) Veröffentlichungstag und Bekanntmachung des Hinweises auf die Patenterteilung: **01.10.1997**
(21) Anmeldenummer: 95903246.7
(22) Anmeldetag: 20.12.1994
(51) Int. Cl.: G02B 6/44

(54) **VERFAHREN UND VORRICHTUNG ZUM BESCHICHTEN MINDESTENS EINES LICHTWELLENLEITERS**
PROCESS AND DEVICE FOR COATING AT LEAST ONE OPTICAL WAVEGUIDE
PROCEDE ET DISPOSITIF POUR L'APPLICATION D'UN REVETEMENT SUR AU MOINS UN GUIDE D'ONDES LUMINEUSES

(30) Priorität: 23.12.1993 DE 4344250
(43) Veröffentlichungstag der Anmeldung: 09.10.1996
(73) Patentinhaber: SIEMENS AKTIENGESELLSCHAFT, 80333 München (DE)
(72) Erfinder: MÜLLER, Thomas, D-96515 Sonneberg (DE); RENNER, Frank, D-96465 Neustadt (DE); REISSENWEBER, Wilfried, D-96472 Rödental (DE); SCHNEIDER, Reiner, D-96237 Ebersdorf (DE)
(86) Internationale Anmeldenummer: DE9401511
(87) Internationale Veröffentlichungsnummer: WO9517694

(56) Entgegenhaltungen:
- EP-A- 0 087 757
- EP-A- 0 255 686
- EP-A- 0 532 999
- EP-A- 0 534 208

## Beschreibung

Die Erfindung betrifft ein Verfahren zum Beschichten mindestens eines Lichtwellenleiters mit einer Füllmasse, wobei die Beschichtung in mindestens zwei aufeinanderfolgenden Füllstufen vorgenommen und zwischen den Füllstufen ein Teil der Füllmasse mittels einer im Querschnitt verringerten Abstreifeinrichtung abgestreift wird.

Ein Verfahren dieser Art ist aus der EP 0 532 999 bekannt. Dort wird die Füllmasse einer ersten Füllkammer zugeführt, die über eine Durchlaßdüse für den Lichtwellenleiter (bzw. das Lichtwellenleiterbündel) mit einer zweiten Füllkammer verbunden ist. Diese zweite Füllkammer liegt entgegen der Durchlaufrichtung von der ersten Füllkammer abgesetzt und ist mit der ersten Füllkammer über einen Beipaß verbunden. Dadurch ist es möglich, daß Füllmasse entgegen der Durchlaufrichtung des Lichtwellenleiters an diesem vorbeigeführt wird. Zwischen den beiden Füllstufen findet ein Abstreifen der Füllmasse statt, was durch einen entsprechend verringerten Querschnitt der Durchtrittsdüse erreicht wird. Die Lage, welche der Lichtwellenleiter innerhalb der Füllmasse einnimmt, ist nicht naher definiert, weil die zweite Füllstufe eine so große Auslaßöffnung aufweist, wie es die gewünschte Materialstärke der Füllmasse erfordert.

Der Erfindung liegt die Aufgabe zugrunde, den Füllvorgang möglichst effektiv zu gestalten und eine weitgehend definierte Lage des Lichtwellenleiters innerhalb der Füllmasse sicherzustellen. Diese Aufgabe wird bei einem Verfahren der eingangs genannten Art dadurch gelöst, daß ein Anteil der abgestreiften Füllmasse im Bereich der Abstreifeinrichtung über einen Beipaß in Durchlaufrichtung des Lichtwellenleiters an diesem vorbeigeleitet und anschließend dem beschichteten Lichtwellenleiter in der zweiten Füllstufe wieder zugeführt wird.

Während beim Stand der Technik gemäß EP 0 532 999 die Füllmasse durch den Beipaß in entgegengesetzter Durchlaufrichtung des Lichtwellenleiters bewegt wird, stellt der erfindungsgemäße Beipaß eine Überbrückung der Abstreifeinrichtung dar, d.h. ein Teil der Füllmasse bewegt sich im Beipaß in der gleichen Richtung wie der bereits beschichtete Lichtwellenleiter (also in Durchlaufrichtung). Über den Beipaß wird ein Anteil der Füllmasse nachträglich wieder zugeführt und zwar dem durch die Abstreifeinrichtung in seiner Position definierten, insbesondere zentrierten, teilbeschichteten Lichtwellenleiter. Dadurch ist es möglich, ausreichend viel Füllmasse für den Lichtwellenleiter vorzusehen, d.h. eine gute und sichere Einbettung zu gewährleisten und zugleich sicherzustellen, daß eine definierte Lage des Lichtwellenleiter innerhalb der Füllmasse eingehalten werden kann.

Die Erfindung betrifft weiterhin eine Vorrichtung zur Durchführung des erfindungsgemäßen Verfahrens, welche dadurch gekennzeichnet ist, daß im Bereich der Abstreifeinrichtung ein Beipaß vorgesehen ist, durch den ein Anteil der abgestreiften Füllmasse an der Abstreifeinrichtung vorbeileitbar ist.

Sonstige Weiterbildungen der Erfindung sind in Unteransprüchen wiedergegeben.

Die Erfindung und ihre Weiterbildungen werden nachfolgend anhand von Zeichnungen näher erläutert in denen Ausführungsbeispiele dargestellt sind. Es zeigen:
- Figur 1: eine nach dem erfindungsgemäßen Verfahren arbeitende Füllvorrichtung im Längsschnitt,
- Figur 2: in vergrößerter Darstellung die Abstreifeinrichtung samt Beipaß nach Figur 1.
- Figur 3 und 4: die Abstreifeinrichtung nach Figur 2 jeweils Querschnittsdarstellung,
- Figur 5: eine andere Ausfrungsform der Abstreifeinrichtung und
- Figur 6: eine Frontansicht zu Fig. 5.

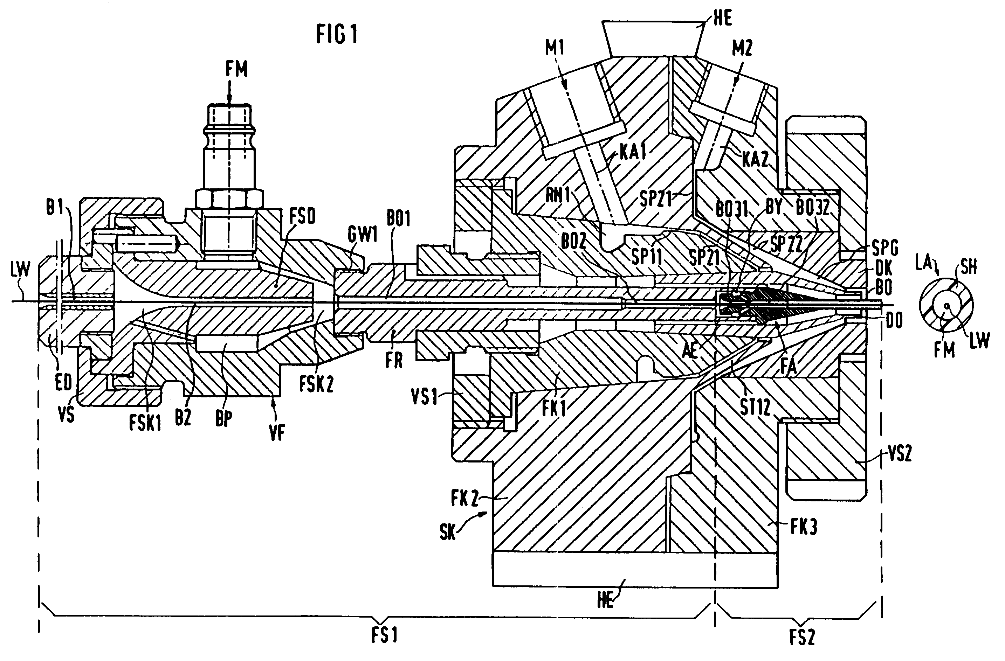

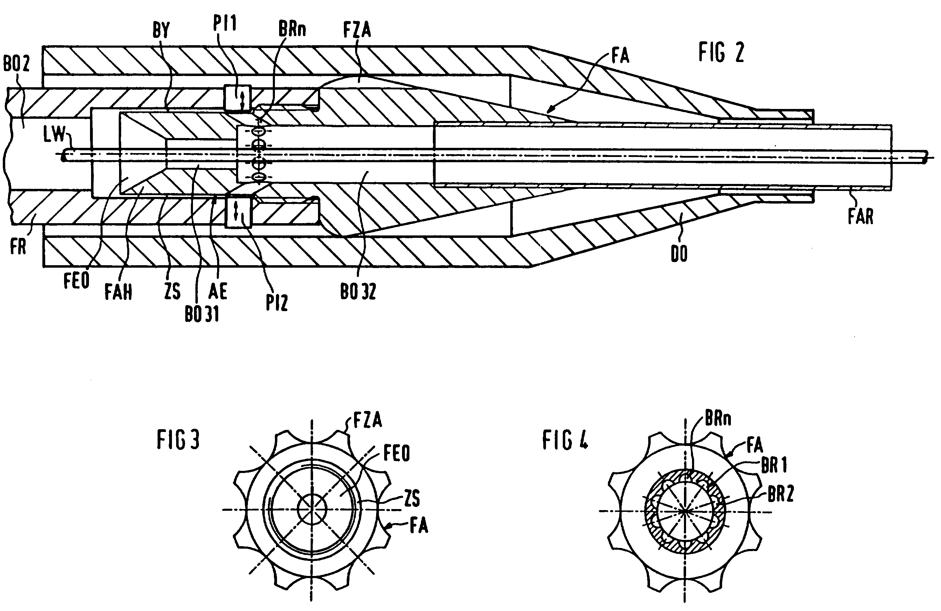

In Figur 1 ist eine zwei Füllstufen FS1 und FS2 enthaltende Fülleinrichtung für die Herstellung einer Lichtwellenleiterader LA vorgesehen, der mindestens ein Lichtwellenleiter LW zugeführt wird. Anstelle eines einzelnen Lichtwellenleiters kann auch ein Bündel aus mehreren Lichtwellenleitern vorgesehen sein. Der Lichtwellenleiter LW wird einer eine Bohrung B1 enthaltenden Eingangsdüse ED einer vorfüllstufe zugeführt, auf die zwei selbständige Füllkammern FSK1 und FSK2 folgen. Der in Durchlaufrichtung gesehen abwärtsliegenden Füllkammer FSK2 wird eine Füllmasse FM zugeführt. Ein Teil dieser Füllmasse FM gelangt über einen Beipaß BP von der stromabwärts liegenden Füllkammer FSK2 in die erste Füllkammer FSK1, d.h. im Beipaß BP fließt die Füllmasse entgegen der Durchlaufrichtung des Lichtwellenleiters LW der durch eine im Querschnitt verengte Führungsdüse FSD hindurchbewegt wird, deren Bohrung mit B2 bezeichnet ist. Aufbau und Wirkungsweise dieser zwei Kammern enthaltenden Fülleinrichtung sind näher in der bereits erwähnten EP 0 532 999 beschrieben. Am Ausgang der Füllkammer FSK2 ist ein längliches Führungsrohr FR vorgesehen, das in seinem Inneren eine erste (größere) Bohrung BO1 und eine sich daran anschließende (kleinere) Bohrung BO2 aufweist, durch die der Lichtwellenleiter LW hindurchgeführt wird. Außen ist das Führungsrohr FR über ein Gewinde GW1 in die Außenwand der Füllkammer FSK2 eingeschraubt. Das Führungsrohr FR hat einen frontseitig daran angebrachten Ansatz FA, der vergrößert in Figur 2 dargestellt ist. Das Führungsrohr FR reicht in das Innere eines Extruderkopfes SK hinein, dessen Einzelheiten in der EP 534 208 beschrieben sind. Dieser Extruderkopf SK dient der Aufbringung einer doppelten Schutzhülle auf den mit Füllmasse beschichteten Lichtwellenleiter LW, wobei die hierfür benötigten Massen M1 und M2 über Kanäle KA1 und KA2 geführt werden. An den Kanal KA1 schließ sich eine Ringnut RN1 an. Die Massen M1 und M2 gelangen über Spalten SP11 und SP21 zu schräg verlaufenden Führungskanälen SP21 und SP22, zwischen denen sich ein Steg ST12 erstreckt. Anschließend treffen sich beide Massen in einem gemeinsamen konischen Kanal SPG, der in einer Bohrung BO endet. Der Außendurchmesser dieser Bohrung legt den Außendurchmesser der zu erzeugenden Lichtwellenleiterader LA fest, wobei deren Schutzhülle SH zweischichtig ausgebildet ist und aus den Materialien M1 und M2 durch Koextrusion gebildet wird. Der Extruderkopf SK ist aus verschiedenen Führungskörpern FK1 (innen liegend) und FK2 und FK3 (außen liegend) zusammengesetzt und wird durch Verschraubungen VS1 und VS2 zusammengehalten. Der gemeinsamen Austrittskanal SPG ist außen durch eine Wandung DK und innen durch einen Dorn DO begrenzt, der eine durchgehende Bohrung BO aufweist, in welche das Führungsrohr FR eintaucht.

Der Füllvorgang selbst läuft so ab, daß die Füllmasse FM zunächst sowohl in die Füllkammer FSK1 und über den im Gegenstrom betriebenen Beipaß BP in die Füllkammer FSK1 geleitet wird. Dadurch ist eine sichere und allseitige Benetzung bzw. Beschichtung des Lichtwellenleiters LW (oder des Lichtwellenleiterbündels) gewährleistet, wobei Lufteinschlüsse weitgehend vermieden sind. Der so beschichtete Lichtwellenleiter LW gelangt zunächst in die Bohrung BO1 des Führungsrohres FR, wobei hier infolge der Verringerung des Querschnitts der Bohrung BO1 gegenüber der Größe der Füllkammer FSK2 bereits eine gewisse Zentrier- und Abstreifwirkung eintritt.

Eine erneute Abstreifwirkung und eine zusätzliche Verbesserung der Beschichtung bzw. Benetzung des Lichtwellenleiters LW mit Füllmasse, tritt durch die im Querschnitt verringerte, stromabwärts liegende zweite Bohrung BO2 ein. Der Lichtwellenleiter LW ist durch den geringen Durchmesser der kleinen Bohrung BO2 in einer bestimmten Weise örtlich geführt, was bei entsprechend großen Bohrungsquerschnitten nicht erreicht werden könnte.

Im allgemeinen ist es wünschenswert und vielfach notwendig, den Lichtwellenleiter möglichst genau definiert, vorzugsweise zentrisch, in einer ausreichend großen Menge an Füllmasse einzubetten. Dies wird am Eingang der zweiten Füllstufe FS2 erreicht durch eine gegenüber der Bohrung BO2 im Durchmesser verringerte Bohrung BO31 im Ansatz FA, der somit in seinem vorderen Teil als Abstreifer AE wirkt. Um trotzdem aber am Ausgang des Ansatzes FA eine ausreichende Menge an Füllmasse zu erhalten, wird Abhilfe dadurch geschaffen, daß die Bohrung BO31 im Ansatz FA mittels eines Beipasses BY überbrückt wird. Der Beipaß BY beginnt am Ende der Bohrung BO2 und mündet in die wieder größere Bohrung BO32 des Ansatzes FA. Dadurch wird ein entsprechender Anteil der Füllmasse FM, welcher durch die kleine Bohrung BO31 im Ansatz FA abgestreift und gestaut wird, über den Beipaß BY geführt und anschließend dem weitgehend genau zentrisch ausgerichteten Lichtwellenleiter LW wieder zugeführt. Nach der Abstreifeinrichtung AE vergrößert sich der Durchmesser der Bohrung BO31 wieder auf ein Maß BO32, wie es die gewünschte Füllmassenstärke innerhalb der Schutzhülle SH der rechts vergrößert dargestellten Lichtwellenleiterader LA erfordert.

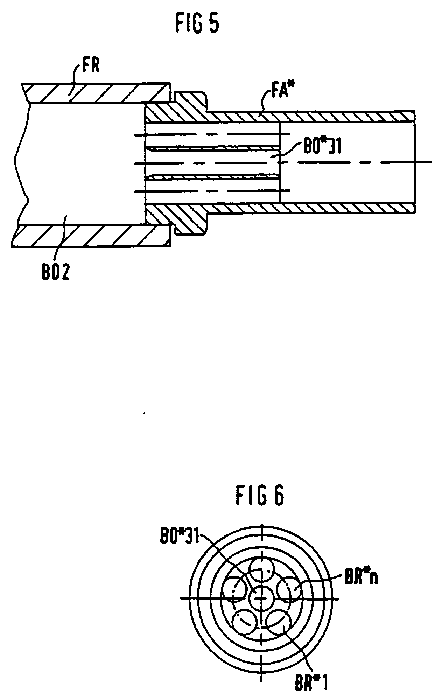

Die Einzelheiten des Aufbaus im Bereich der Abstreifeinrichtung AE nach Figur 1 sind aus der vergrößerten Schnittdarstellung der Figur 2 ersichtlich. Der Ansatz FA ist in das Innere des Führungsrohrs FR eingeschraubt, wobei sich ein hülsenförmiger Fortsatz FAH ein Stück in das Innere des Rohres FR hinein erstreckt. In dem Fortsatz FAH ist eine konusförmig ausgebildete Eintrittsöffnung FEO vorgesehen, die in die im Durchmesser gegenüber der Bohrung BO2 stark verringerte Bohrung BO21 übergeht. Der Öffnungswinkel beträgt zweckmäßig etwa 15° bis 45°. Die Bohrung BO31 in dem hülsenförmigen Fortsatz FAH dient als Abstreifeinrichtung AE, wobei die Bohrung BO31 nur wenig größer gewählt ist, als der Außendurchmesser des Lichtwellenleiters LW bzw. eines etwaigen Lichtwellenleiterbündels. Dadurch ist eine sehr geringe aber genau definierte Menge an Füllmasse noch auf dem Lichtwellenleiter bzw. Lichtwellenleiterbündel vorhanden, wobei diese Menge an Füllmasse jedoch nicht für die gewünschte Polsterwirkung innerhalb der Aderhülle SH ausreichen würde. Um dennoch eine ausreichend große Menge an Füllmasse um den Lichtwellenleiter herum anzuordnen, ist der Beipaß BY vorgesehen, der zunächst die Form eines zylindrischen Spaltes ZS aufweist. Dieser zylindrische Spalt ZS geht an seinem Ende über schräg verlaufende, kranzförmig angeordnete Einzelbohrungen BR1 bis BRn in das Innere des Ansatzes FA über, wobei die Füllmasse am Ende der Kalibrierbohrung BO31 wieder dem beschichteten Lichtwellenleiter LW zugeführt wird. Einzelheiten sind aus Figur 4 ersichtlich, die einen Querschnitt senkrecht zur Längsachse des Ansatzes FA verlaufend im Bereich der Schrägbohrungen BR1 bis BRn zeigt. Die Zahl dieser schräg oder radial verlaufenden Bohrungen BR1 bis BRn wird entsprechend der zusätzlichen Füllmassen-Zufuhr gewählt. Ebenso kann die Menge der zugeführten Füllmasse durch den Durchmesser dieser Schrägbohrungen BR1 bis BRn eingestellt werden.

Die nachfolgende Bohrung BO32 ist in ihrem Durchmesser vergrößert und zwar zweckmäßig auf das 1,... bis 2,... -fache der vorangegangenen Kalibrierbohrung BO31. Der so zusätzlich entstehende Füllraum wird von dem über dem Beipaß BY zugeführten Füllmassenanteil aufgefüllt, wobei der Lichtwellenleiter LW im weiteren Verlauf des Ansatzes FA genau zentrisch, d.h. an einer durch die Kalibrierbohrung BO31 vorbestimmten und definierten Stelle innerhalb der Füllmasse eingebettet ist. Der Ansatz FA weist zweckmäßig ausgangsseitig einen rohrförmigen Fortsatz FAR (Innendurchmesser ebenfalls BO32) auf. Dabei ist dieser Fortsatz wie aus Figur 1 ersichtlich, zweckmäßig so lang ausgebildet, daß er durch den Extruderkopf hindurchreicht und erst nach dem Ende der Extrusion der Schutzhülle SH dienenden Ringdüse BO des Spritzkopfes SK endet. Der Ansatz FA ist im Inneren des Dornes DO des Extruderkopfes SK geführt und liegt mit stegförmig nach außen gerichteten Stegen FZA (vergleiche Figur 3, die eine Frontansicht des Ansatzes FA in Richtung auf die Eintrittsöffnung FEO gesehen zeigt) an der Innenwand des Dornes DO an. Dadurch wird sichergestellt, daß möglichst wenig Wärme von dem Extruderspritzkopf SK auf den Ansatz FA übertragen wird. Gegebenenfalls kann als zusätzliche Wärmeisolierung eine entsprechende Isolierschicht, z.B. an der Innenwand des Dornes DO angebracht werden.

Die extrudierte Schutzhülle SH wird am Ausgang der Spritzdüse BO auf den Außendurchmesser des rohrförmigen Fortsatzes FAR heruntergezogen und dadurch luft- und spaltfrei auf die Außenschicht der Füllmasse FM aufgebracht. Als Füllmassen sind insbesondere wasserabweisende, vorzugsweise Öl-Anteile enthaltende Massen einsetzbar. Zweckmäßig sind diese mit Tixotropierungs- und/oder Verdickungsmitteln versetzt.

Die Erfindung ergibt die Möglichkeit, eines störungsfreien kontinuierlichen sicher und zuverlässig arbeitenden Füll-oder Beschichtungsvorgang für Füllmassen bei der Herstellung von sogenannten Hohladern ("loose tube") durchzuführen. Die Erfindung ist einsetzbar bei Ein- und Mehrkomponentenmassen, kompressiblen Massen usw., d.h. sie ist unabhängig von Aufbau und Zusammensetzung der Füllmassen anwendbar. Die Erfindung ermöglicht es, hohe Durchlaufgeschwindigkeiten, z.B. in der Größenordnung von mehr als 100 m/min zu realisieren und liefert genau zentrisch im Inneren der Schutzhülle SH positionierte Lichtwellenleiter oder Lichtwellenleiterbündel. Stark exzentrisch aufgebrachte Füllmassenstränge können z.B. Störungen dadurch hervorrufen, daß der Lichtwellenleiter LW an der Innenwand der extrudierten Kunststoffhülle beim Kontrahieren anklebt. Auch sind bei dem erfindungsgemäßen Beschichtungsverfahren etwaige Fluchtfehler in der Durchlaufrichtung des Lichtwellenleiters LW und z.B. räumliche Abweichungen einzelner Komponenten, z.B. des Extruderkopfes SK gegenüber der Vorbeschichtungseinrichtung VF unkritisch, weil durch die Abstreifeinrichtung AE und dem Beipaß BY etwaige Fluchtfehler wieder behoben werden. Eine vollständig achsgenaue Ausrichtung aller Elemente der Fülleinrichtung ist somit nicht zwingend erforderlich.

Es ist zweckmäßig, die Abstreifeinrichtung AE in einem gewissen Abstand nach der Vorfülleinrichtung VF anzuordnen und zwar zweckmäßig in einem Abstand zwischen 10 und 200 mm (entsprechend etwa der Länge des Rohres FR).

In Figur 5 ist ein abgewandelt ausgebildeter Ansatz FA^{∗} dargestellt, der ebenso wie bei Figur 1 gezeigt, am auslaufseitige Enden des Führungsrohres FR in dieses eingeschraubt werden kann. Wie aus der Frontansicht nach Figur 6 hervorgeht, ist in der Mitte eine zentrisch verlaufende Bohrung BO^{∗}31 vorgesehen, die (wie BO31 in Fig. 1 und 2) als Kalibrierdüse dient und den Lichtwellenleiter LW bzw. ein Lichtwellenleiterbündel aufnimmt. Auf einem Teilkreis sind n-Bohrungen BR^{∗}1 bis BR^{∗}n angeordnet, die parallel zur zentrischen Bohrung BR^{∗}31 verlaufen. Diese Bohrungen BR^{∗} 1 bis BR^{∗}n bilden den Beipaß für die abgestreifte überschüssige Füllmasse und der Ansatz FA^{∗} stellt somit ebenfalls eine Abstreifeinrichtung gegenüber der Bohrung BO2 des Führungsrohres FR dar.

Für die Dimensionierung der verschiedenen Bohrungen der in Figur 1 dargestellten Fülleinrichtung gelten folgende Überlegungen:
a) Beschichtung eines einzelnen Lichtwellenleiters:
   Die Bohrungen B1, B2 und BO31 werden nur wenig größer gewählt (zweckmäßig um 5- 25%) als der Außendurchmesser des jeweiligen Lichtwellenleiters maximal (d.h. unter Berücksichtigung von Durchmesserschwankungen) sein kann. Damit ist eine möglichst zentrische Anordnung des Lichtwellenleiters LW innerhalb der Schutzhülle SH der Lichtwellenleiterader LA erreichbar. Weiterhin ist damit sichergestellt, daß möglichst wenig Füllmaterial aus der Füllkammer FSK1 über die Eintrittsdüse ED entgegen der Durchlaufrichtung des Lichtwellenleiters LW nach links austritt und damit für den Füllvorgang verloren geht.
   Die Bohrung BO1 hat einen Innendurchmesser der zweckmäßig zwischen dem 1,5- bis 3-fachen des maximalen Außendurchmessers des Lichtwellenleiters LW liegt. Die Bohrung BO2 ist großer gewählt, als die Bohrung BO31 der Abstreifeinrichtung AE und kann zweckmäßig zwischen dem 1,3- und 2-fachen des Außendurchmessers des Lichtwellenleiters LW gewahlt werden. In diesem Bereich ergibt sich die vorteilhafte Möglichkeit, durch Anwendung eines entsprechenden Drucks für die Füllmasse FM eine höhere Fließgeschwindigkeit (infolge des geringen Querschnitts der Bohrung BO2) zu erreichen, was dazu führt, daß ein gewisser Mitnahmeeffekt für den Lichtwellenleiter LW infolge der (gegenüber der Durchlaufgeschwindigkeit von LW) größeren Durchflußgeschwindigkeit der Füllmasse FM eintritt. Dieser Mitnahmeeffekt führt dazu, daß der Lichtwellenleiter LW praktisch vorwärts geschoben wird, was einem Beitrag zur Einstellung der Überlänge des Lichtwellenleiters LW gegenüber der Schutzhülle SH liefern kann.
   Die Bohrung BO32 legt schließlich den Anteil der Füllmasse FM innerhalb der Schutzhülle SH fest und ist deshalb entsprechend den Anforderungen an die jeweilige Lichtwellenleiterader LA zu wählen. Die Bohrung BO32 und die Bohrung BO2 sind zweckmäßig etwa gleich groß gewählt. Da die Bohrung BO31 zweckmäßig praktisch vollständig durch den Lichtwellenleiter bzw. das Lichtwellenleiterbündel verschlossen ist, wird zweckmäßig etwa BO2 so groß gewählt wie BO32.
b) Beschichtung eines Bündels aus Lichtwellenleitern:
   Die Bohrung Bl und die Bohrung B2 sowie die Bohrung BO31 werden so gewählt, daß das jeweilige Lichtwellenleiterbündel gerade noch mit Sicherheit durch die jeweilige Öffnung hindurchbewegt werden kann, ohne an dieser Innenwand jeweils ernsthaft anzustreifen. Dies bedeutet, daß die Bohrungen B1, B2 und BO31 gerade etwas größer gewahlt werden als die Außenkontur des kleinsten, das jeweilige Lichtwellenleiterbündel umschließenden Kreises. Dabei hat es sich als zweckmäßig erwiesen, die Bohrungen B1, B2 und BO31 um etwa den Durchmesser eines Lichtwellenleiters größer zu wählen als der Durchmesser des Umschließungskreises des Bündels. Dadurch ist auch bei etwaigen irregulären Anordnungen der Lichtwellenleiter ein ernsthaftes Anstreifen des Lichtwellenleiterbündels an der Innenwand dieser Bohrungen in praktisch allen Fällen vermeidbar.
   Die Dimensionierung der Bohrung BO2 kann wie bereits oben unter a) erwähnt bei Auswahl eines entsprechend engen Querschnitts mit zur Erzeugung einer Schubkraft auf das Lichtwellenleiterbündel mit herangezogen werden, wenn dieser Querschnitt gegenüber dem der Bohrung BO1 verringert ist. Dadurch tritt dort eine größere Füllmassengeschwindigkeit auf als die eigentliche Durchlaufgeschwindigkeit des Lichtwellenleiterbündels und es entsteht eine Art Mitnahmeeffekt.

Bei den vorstehenden Ausführungsbeispielen ist davon ausgegangen, daß eine möglichst zentrische Anordnung des Lichtwellenleiter bzw. Lichtwellenleiterbündels innerhalb der Schutzhülle SH erreicht werden soll. In manchen Fällen kann es jedoch zweckmäßig sein, eine genau definierte exzentrische Anordnung der Lichtwellenleiter bzw. Lichtwellenleiterbündel anzustreben. Dies gilt beispielsweise dann, wenn unmittelbar nach der Aderherstellung ein Auftrommelvorgang beabsichtigt ist, bei dem der Lichtwellenleiter unter Zugspannung in eine z.B. an der Innenwand der Schutzhülle SH anliegende Bahn gebracht werden soll. Hierzu kann durch eine einfache Abwandlung des Aufbaus dadurch beigetragen werden, daß z.B. Stifte PI1 und PI2 (Fig. 2) im Bereich des Spaltes ZS vorgesehen sind, welche bestimmte Schrägbohrungen BRN für den Durchfluß von Füllmasse verschließen. Wird beispielsweise in Figur 2 der Stift PI1 nach unten bewegt und damit die zugehörige Schrägbohrung verschlossen, dann tritt im oberen Teil nach der Abstreifeinrichtung AE weniger Füllmasse hinzu als im unteren Teil, wo der entsprechende Stift PI2 die Schragbohrung nicht verschließt. Dies hat zur Folge, daß unten mehr Füllmasse zugeführt wird als oben, was zu einer exzentrischen Anordnung des Lichtwellenleiters und zwar in eine mehr nach oben verschobene Position führt. Die Steuerung dieser Vorgänge kann soweit verfeinert werden, daß jede der Schrägbohrungen z.B. mit einem entsprechenden von außen anzusteuernden Stift verschlossen bzw. geöffnet werden kann, wodurch eine feine Dosierung der exzentrischen Anordnung des Lichtwellenleiters innerhalb der Schutzhülle durchgeführt werden kann. Es kann aber auch ausreichend sein, z.B. jede zweite oder dritte Schrägbohrung mit einem entsprechenden Stift verschließbar zu machen.

Werden die Stifte, z.B. PI1, PI2 usw. nacheinander in Umlaufrichtung aktiviert, dann ergibt sich eine Verlagerung des Lichtwellenleiters in unterschiedliche Positionen bezogen auf die Längsachse der Lichtwellenleiterader und somit insgesamt ein etwa helixförmiger Verlauf des Lichtwellenleiters innerhalb der Schutzhülle. Ein derartiger helixfÖrmiger Verlauf des Lichtwellenleiters bzw. des Lichtwellenleiterbündels ist insbesondere dann zweckmäßig, wenn ein größerer Prozentsatz an Überlänge erwünscht ist. Eine derartige exzentrische Einbringung von Lichtwellenleitern in einer genau definierten Weise ist im übrigen auch dadurch möglich, daß der Ansatz FA eine exzentrisch verlaufende Bohrung BO3l und BO32 aufweist, und insgesamt drehbar innerhalb des Dorns DO angeordnet ist. Hierzu ist es lediglich notwendig, den Ansatz FA mittels einer entsprechenden Drehdichtung mit dem Führungsrohr FR zu verbinden. Es ist aber auch möglich, das Führungsrohr FR als Ganzes drehbar auszubilden und anstelle des Gewindes GW1 eine entsprechende Drehdichtung vorzusehen. Auch in diesem Fall erzeugt eine exzentrisch angebrachte Kalibrierbohrung BO31 einen genau definierten helixförmigen Verlauf für den Lichtwellenleiter bzw. das Lichtwellenleiterbündel LW innerhalb der Füllmasse FM.

## Patentansprüche

1. Verfahren zum Beschichten mindestens eines Lichtwellenleiters (LW) mit einer Füllmasse (FM), wobei die Beschichtung in mindestens zwei aufeinanderfolgenden Füllstufen (FS1, FS2) vorgenommen und zwischen den Füllstufen ein Teil der Füllmasse (FM) mittels einer im Querschnitt verringerten Abstreifeinrichtung (AE) abgestreift wird,
**dadurch gekennzeichnet**,
daß ein Anteil der abgestreiften Füllmasse im Bereich der Abstreifeinrichtung (AE) über einen Beipaß (BY) in Durchlaufrichtung des Lichtwellenleiter (LW) an diesem vorbeigeleitet und anschließend dem mit Füllmasse beschichteten Lichtwellenleiter (LW) in der zweiten Füllstufe (FS2) wieder zugeführt wird.

2. verfahren nach Anspruch 1,
**dadurch gekennzeichnet**,
daß der Lichtwellenleiter (LW) vor der Abstreifeinrichtung (AE) über mindestens einen Bereich mit größerem Querschnitt (BO1, BO2) als der Durchmesser der Abstreifeinrichtung (AE) geführt wird.

3. Verfahren nach einem der vorhergehenden Ansprüche,
**dadurch gekennzeichnet**,
daß im Bereich der ersten Füllstufe (FS1) in einer vorfülleinrichtung (VF) eine Vorbeschichtung des Lichtwellenleiters(LW) mit Füllmasse durchgeführt wird.

4. Verfahren nach einem der vorhergehenden Ansprüche,
**dadurch gekennzeichnet**,
daß der im Beipaß (BY) geführte Anteil der abgestreiften Füllmasse über Bohrungen (BR1 - BRn; BR^{∗}1 - BR^{∗}n) dem beschichteten Lichtwellenleiter (LW) zugeführt wird.

5. Verfahren nach einem der vorhergehenden Ansprüche,
**dadurch gekennzeichnet**,
daß der Abstreifvorgang im Inneren eines Extruderkopfes (SK) durchgeführt wird.

6. Verfahren nach einem der vorhergehenden Ansprüche,
**dadurch gekennzeichnet**,
daß nach dem Abstreifvorgang der mit Füllmasse beschichtete Lichtwellenleiters (LW) durch ein Führungsrohr (FAR) bewegt wird.

7. Vorrichtung zum Beschichten mindestens eines Lichtwellenleiters (LW) mit einer Füllmasse (FM), wobei für die Beschichtung mindestens zwei aufeinanderfolgende Füllstufen (FS1, FS2) vorgesehen sind und zwischen den Füllstufen eine im Querschnitt verringerte Abstreifeinrichtung (AE) vorgesehen ist, die einen Teil der Füllmasse (FM) abstreift ,
**dadurch gekennzeichnet**,
daß im Bereich der Abstreifeinrichtung (AE) ein Beipaß (BY) vorgesehen ist, durch den ein Anteil der abgestreiften Füllmasse (FM) an der Abstreifeinrichtung vorbeigeleitet und anschließend dem mit Füllmasse beschichteten Lichtwellenleiter (LW) in der zweiten Füllstufe (FS2) wieder zugeführt ist.

8. Vorrichtung nach Anspruch 7,
**dadurch gekennzeichnet**,
daß die Abstreifeinrichtung (AE) in einem Ansatz (FA) angebracht ist, der seinerseits an einem Führungsrohr (FR) befestigt ist.

9. Vorrichtung nach einem der Ansprüche 7 und 8,
**dadurch gekennzeichnet**,
daß im Bereich der Abstreifeinrichtung (AE) eine im Querschnitt verringerte Kalibrierdüse (BO31, BO^{∗}31) vorgesehen ist.

10. Vorrichtung nach Anspruch 9,
**dadurch gekennzeichnet**,
daß die Kalibrierdüse (BO31, BO^{∗}31) nur geringfügig größer gewählt ist als der Außendurchmesser des Lichtwellenleiters bzw. des Lichtwellenleiterbündels.

11. Vorrichtung nach einem der Ansprüche 7 bis 10,
**dadurch gekennzeichnet**,
daß der Beipaß (BY) durch einen zylindrischen Spalt (ZS) und durch anschließende, vorzugsweise schräg nach innen in Richtung auf den Lichtwellenleiter (LW) verlaufende, Bohrungen (BR1 - BRn) gebildet ist.

12. Vorrichtung nach einem der Ansprüche 7 bis 10,
**dadurch gekennzeichnet**,
daß der Beipaß (BY) durch etwa achsparallel verlaufende Bohrungen (BR^{∗}1 - BR^{∗}n) gebildet ist.

13. Vorrichtung nach einem der Ansprüche 7 bis 12,
**dadurch gekennzeichnet**,
daß an der Abstreifeinrichtung (AE) ein konusförmige Einlauföffnung (FEO) vorgesehen ist, deren Öffnungswinkel zwischen 15° und 45° gewählt ist.

## Claims

1. Process for coating at least one optical waveguide (LW) with a filling compound (FM), the coating being undertaken in at least two successive filling stages (FS1, FS2) and part of the filling compound (FM) being wiped off by means of a wiping device (AE) of reduced cross section between the filling stages, characterized in that a proportion of the filling compound which is wiped off in the region of the wiping device (AE) is led past the optical waveguide (LW) in the passage direction of the latter via a bypass (BY) and is subsequently fed once more to the optical waveguide (LW), coated with filling compound, in the second filling stage (FS2).

2. Process according to Claim 1, characterized in that the optical waveguide (LW), upstream of the wiping device (AE), is led via at least one region having a cross section (BO1, BO2) which is greater than the diameter of the wiping device (AE).

3. Process according to one of the preceding claims, characterized in that, in the region of the first filling stage (FS1), a precoating of the optical waveguide (LW) with filling compound is carried out in a prefilling device (VF).

4. Process according to one of the preceding claims, characterized in that the proportion of the wiped-off filling compound led in the bypass (BY) is fed to the coated optical waveguide (LW) via bores (BR1 - BRn; BR*1 - BR^{∗}n).

5. Process according to one of the preceding claims, characterized in that the wiping process is carried out in the interior of an extruder head (SK).

6. Process according to one of the preceding claims, characterized in that, after the wiping process, the optical waveguide (LW) coated with filling compound is moved through a guide tube (FAR).

7. Device for coating at least one optical waveguide (LW) with a filling compound (FM), at least two successive filling stages (FS1, FS2) being provided for the coating and, between the filling stages, a wiping device (AE) of reduced cross section being provided, which wipes off part of the filling compound (FM), characterized in that, in the region of the wiping device (AE) there is provided a bypass (BY) through which a proportion of the filling compound (FM) which is wiped off is led past the wiping device and is subsequently fed once more to the optical waveguide (LW), coated with filling compound, in the second fillinq stage (FS2).

8. Device according to Claim 7, characterized in that the wiping device (AE) is fitted in an attachment (FA) which, for its part, is fastened to a guide tube (FR).

9. Device according to one of Claims 7 and 8, characterized in that a calibration nozzle (BO31, BO*31) of reduced cross section is provided in the region of the wiping device (AE).

10. Device according to Claim 9, characterized in that the calibration nozzle (BO31, BO*31) is selected to be only slightly larger than the outer diameter of the optical waveguide or of the optical waveguide bundle.

11. Device according to one of Claims 7 to 10, characterized in that the bypass (BY) is formed by a cylindrical gap (ZS) and by adjoining bores (BR1 - BRn) which preferably run obliquely inwards in the direction of the optical waveguide (LW).

12. Device according to one of Claims 7 to 10, characterized in that the bypass (BY) is formed by bores (BR*1 - BR*n) which run approximately axially parallel.

13. Device according to one of Claims 7 to 12, characterized in that there is provided on the wiping device (AE) a cone-shaped inlet opening (FEO) of which the opening angle is selected between 15° and 45°.

## Revendications

1. Procédé de revêtement d'au moins un guide (LW) d'ondes lumineuses d'une matière (FM) de remplissage, dans lequel on effectue le revêtement dans au moins deux étages successifs de remplissage (FS1,FS2), et dans lequel on enlève, entre les étages de remplissage, une partie de la matière (FM) de remplissage au moyen d'un dispositif (AE) d'enlèvement de section transversale réduite,
caractérisé en ce que
dans la zone du dispositif (AE) d'enlèvement, on fait passer par une dérivation (BY), dans la direction de passage du guide (LW) d'ondes lumineuses, une partie de la matière de remplissage enlevée, à côté du guide (LW) d'ondes lumineuses, puis on la renvoie au guide (LW) d'ondes lumineuses revêtu de matière de remplissage, dans le second étage (FS2) de remplissage.

2. Procédé suivant la revendication 1,
caractérisé en ce que
on guide le guide (LW) d'ondes lumineuses devant le dispositif d'enlèvement (AE) sur au moins une zone de section transversale (BO1, BO2) plus grande que le diamètre du dispositif (AE) d'enlèvement.

3. Procédé suivant l'une des revendications précédentes,
caractérisé en ce que
on effectue un revêtement préalable du guide (LW) d'ondes lumineuses de matière de remplissage dans la zone du premier étage (FS1) de remplissage dans un dispositif (VF) de remplissage préalable.

4. Procédé suivant l'une des revendications précédentes,
caractérisé en ce que
on envoie la partie, passée dans la dérivation (BY), de la matière de remplissage enlevée par des perçages (BR1 à BRn; BR*1 à BR*n) au guide d'ondes lumineuses (LW) revêtu.

5. Procédé suivant l'une des revendications précédentes,
caractérisé en ce que
on effectue l'opération d'enlèvement à l'intérieur d'une tête (SK) d'extrusion.

6. Procédé suivant l'une des revendications précédentes,
caractérisé en ce que
on déplace après l'opération d'enlèvement le guide (LW) d'ondes lumineuses revêtu de matière de remplissage dans un tube (FAR) de guidage.

7. Dispositif de revêtement d'au moins un guide (LW) d'ondes lumineuses d'une matière (FM) de remplissage, deux étages (FS1,FS2) successifs de remplissage au moins étant prévus pour le revêtement et un dispositif (AE) d'enlèvement de section transversale réduite, qui enlève une partie de la matière (FM) de remplissage, étant prévu entre les étages de remplissage,
caractérisé en ce que
il est prévu dans la zone du dispositif (AE) d'enlevement une dérivation (BY), par laquelle une partie de la matière (FM) de remplissage enlevée est passée, à côté du dispositif d'enlèvement, et est renvoyée ensuite au guide (LW) d'ondes lumineuses revêtu de matière de remplissage dans le second étage (FS2) de remplissage.

8. Dispositif suivant la revendication 7,
caractérisé en ce que
le dispositif (AE) d'enlèvement est mis en place dans un prolongement (FA), qui est fixé pour sa part à un tube (FR) de guidage.

9. Dispositif suivant l'une des revendications 7 et 8,
caractérisé en ce que
il est prévu dans la zone du dispositif (AE) d'enlèvement une buse (BO31, BO*31) de calibrage de section transversale réduite.

10. Dispositif suivant la revendication 9,
caractérisé en ce que
la buse (BO31, BO*31) de calibrage n'est choisie que légèrement plus grande que le diamètre extérieur du guide d'ondes lumineuses ou du faisceau de guides d'ondes lumineuses.

11. Dispositif suivant l'une des revendications 7 à 10,
caractérisé en ce que
la dérivation (BY) est formée d'un intervalle cylindrique (ZS) et de perçages (BR1 à BRn) s'y raccordant et s'étendant de préférence en oblique vers l'intérieur dans la direction du guide (LW) d'ondes lumineuses.

12. Dispositif suivant l'une des revendications 7 à 10,
caractérisé en ce que
la dérivation (BY) est formée de perçages (BR*1 à BR*n) s'étendant à peu près parallèlement à l'axe.

13. Dispositif suivant l'une des revendications 7 à 12,
caractérisé en ce que
il est prévu sur le dispositif (AE) d'enlèvement une ouverture (FEO) d'introduction conique, dont l'angle d'ouverture est choisi entre 15° et 45°.
